# EUROPEAN PATENT APPLICATION

(11) **EP 4 357 714 A1**
(43) Date of publication of application: **24.04.2024**
(21) Application number: 22202942.3
(22) Date of filing: 21.10.2022
(51) Int. Cl.: F28D 1/04, F03D 80/60, F28F 9/02, F28F 13/12, H02K 9/02, F28D 21/00

(54) **HEAT TRANSFER ARRANGEMENT**

(71) Applicant: Siemens Gamesa Renewable Energy A/S, 7330 Brande (DK)
(72) Inventor: Christensen, Jens Brix, 7100 Vejle (DK); Østergaard, Sune Borg, 7400 Herning (DK)
(74) Representative: SGRE-Association

(57) **Abstract**

The invention describes a heat transfer arrangement (1) for a first group (GL) and a second group (GH) of heat-dissipating components, comprising a fluid line circuit (14); a first heat exchanger (HI) arranged to circulate heat transfer fluid through the fluid line circuit (14); a second heat exchanger (H2) arranged to circulate heat transfer fluid through the fluid line circuit (14); wherein the fluid line circuit (14) includes a common fluid line (L₁₂) comprising a first portion (L1) leading to a first component group (GL) and a second portion (L2) leading to a second component group (GH); and a fluid line junction (10) formed by the convergence of the outflow line (H1ₒᵤₜ) of the first heat exchanger (HI), the outflow line (H2ₒᵤₜ) of the second heat exchanger (H2), the first portion (L1) of the common fluid line (L₁₂) and the second portion (L2) of the common fluid line (L₁₂), wherein the outflow line (H1ₒᵤₜ, H2ₒᵤₜ) of each heat exchanger (HI, H2) subtends an acute angle (β, β1, β2) of at most 75° to the second portion (L2) of the common fluid line (L₁₂).

## Description

### Background

An industrial facility or plant that deploys heat-dissipating components such as a generator, a motor, a power converter, one or more electrical cabinets etc., is generally provided with some means of removing heat from these components. It can be necessary to cool such components in order to avoid damage from over-heating, but also because the efficiency of such components may decrease with increasing temperature. Various modes of heat transfer are known. For example, a wind turbine can be equipped with a heat transfer system that circulates a heat transfer fluid (commonly referred to as "coolant fluid") between a heat source (e.g. a heat-dissipating component such as the high-voltage power converter) and a liquid-to-air heat exchanger. Various modes of heat transfer are known, and the underlying principle is to circulate a heat transfer fluid through fluid lines arranged within or beside the heat source, and to remove heat from the warmed fluid. For example, a liquid-to-air heat exchanger is linked to the heat source by a fluid line, and an arrangement of fins or plates allows heat to be transferred from the warmed heat transfer fluid to the ambient air. The cooled fluid is then returned to the heat source. For example, in the case of a wind turbine, a large liquid-to-air heat exchanger can be realised at the exterior and may be mounted towards the rear of the nacelle so that airflow over the heat exchanger can efficiently remove heat from the heat transfer fluid.

A plant such as a wind turbine will generally comprise various kinds of heat-dissipating components, and these may have different cooling requirements. The usual way of dealing with this aspect is to provide separate heat transfer assemblies for the different component types. Each heat transfer assembly has an outflow line that transports coolant from a heat exchanger to heat-dissipating components, and a return line that conveys the warmed heat transfer fluid back to the heat exchanger.

However, the need to provide separate heat transfer assemblies is associated with higher costs, since each heat transfer arrangement requires an arrangement of fluid lines or pipes, a pump to convey the heat transfer fluid in the pipes, one or more temperature sensors, various valves to regulate fluid flow, and a control interface. Furthermore, maintenance and repair of several heat transfer assemblies adds to the overall running costs of a plant such as a wind turbine, particularly in the case of offshore wind turbines.

It is therefore an object of the invention to provide a more economical way of providing efficient heat transfer from multiple heat-dissipating components.

This object is achieved by the claimed heat transfer arrangement, by the claimed wind turbine and by the claimed method of connecting a plurality of heat-dissipating components in a heat transfer arrangement.

### Description

In the following, a plant is assumed to comprise a plurality of heat-dissipating components with different cooling requirements, and components are - virtually or physically - arranged in "groups" according to their cooling requirements.

According to the invention, the heat transfer arrangement for a first group and a second group of heat-dissipating components comprises a fluid line circuit through which heat transfer fluid is conveyed; a first heat exchanger arranged to circulate heat transfer fluid through the fluid line circuit; and a second heat exchanger arranged to circulate heat transfer fluid through the same fluid line circuit. The fluid line circuit of the inventive heat transfer arrangement comprises a common fluid line between the first group of heat-dissipating components and the second group of heat-dissipating components, with a first portion leading to the first component group and a second portion leading to the second component group. The fluid line circuit further comprises a fluid line junction formed by the convergence of the outflow line of the first heat exchanger, the outflow line of the second heat exchanger, and both portions of the common fluid line. In the inventive heat transfer arrangement, an outflow line subtends an acute intake angle of at most 75° to the second portion of common fluid line.

The temperatures in one of the component groups may need to be kept below a certain threshold in order to ensure that the plant can be kept operational, so that cooling of that component group is accorded a higher priority. In the context of the invention, the second component group shall be understood to comprise at least one heat-sensitive component vital for the operation of the plant such as a computer for controlling the plant, an uninterruptible power supply for components of the plant, functionally relevant electrical modules housed in a cabinet, etc. Generally, the temperature of such devices is monitored, and a plant shutdown procedure may be initiated when the temperature rises to a threshold such as 50 °C to avoid risk of catastrophic heat damage to the electrical devices. The cooling of the second component group is therefore given high priority, and in the following, this second component group may be referred to as the "high-priority component group" or simply the "high-priority group".

The other component group shall be understood to comprise heat-dissipating components such as a power converter, a transformer, an auxiliary converter, various hydraulics, bearings etc. Such components can have very large heat losses compared to components in the "high priority" group. However, when such a component overheats, it may be possible to curtail or de-rate the plant, allowing the temperature of the overheated component to return to a normal level. Since overheating of such a component can be dealt with without shutting down the plant, this first component group may be referred to in the following as the "low-priority component group" or simply the "low-priority group". The "high-priority" and "low-priority" terms relate only to the cooling requirements of the component groups; these terms do not relate in any way to the functional relevance of a component.

The heat exchangers can be similar in size, i.e. the heat exchangers may be of comparable dimensions and may have similar cooling capacity. With the inventive heat transfer arrangement, a component group can be cooled with heat transfer fluid originating from either heat exchanger, as will be explained below. In the following, the terms "coolant" and "heat transfer fluid" may be used interchangeably. The fluid line circuit or "cooling circuit" may comprise a means of moving the coolant through the fluid lines, for example a pump arranged in a fluid line.

The coolant fluid in the first outflow line and the coolant fluid in the second outflow line may have the same temperature, but will usually have different temperatures. In a heat transfer arrangement of the type discussed herein, a hotter coolant fluid in a fluid line usually has a higher flow rate, and therefore more kinetic energy, than a colder coolant fluid in an identical fluid line. The invention exploits this behaviour at the fluid line junction. Instead of joining each outflow line to the common fluid line using a conventional 90° joint or "T-junction", each outflow line joins the common fluid line at an acute angle. The momentum of the heat transfer fluid with the higher flow rate will carry it onwards into the first portion of the common fluid line, while the heat transfer fluid with the lower flow rate will always be forced "around the corner" into the second portion of the common fluid line. This behaviour is exploited on the assumption that the heat transfer fluid with the lower flow rate most likely has a lower temperature than the heat transfer fluid with the higher flow rate: at the fluid line junction, the momentum of the heat transfer fluid with the higher flow rate (the hotter fluid) will carry it towards the low-priority group, and the heat transfer fluid with the lower flow rate (the cooler fluid) will be compelled to move towards the high-priority group. Effectively, the inventive heat transfer arrangement ensures that the colder heat transfer fluid is always directed towards to the high-priority component group. In other words, the heat exchanger with the lowest flow rate (and presumably the cooler fluid) will cool the high-priority component group, and the other heat exchanger will cool the low-priority component group.

For example, even though the first heat exchanger may have been cooling the low-priority component group and the second heat exchanger may have been cooling the high-priority component group, a "switchover" between the component groups will result when the heat transfer fluid leaving the first heat exchanger is colder than heat transfer fluid leaving the second heat exchanger. An advantage of the invention is that such a "switchover" results in an entirely passive manner, so that the heat transfer arrangement does not require any additional valves or control means to ensure that the high-priority group always receives the cooler heat transfer fluid, i.e. the invention achieves flow-based temperature prioritisation for the different cooling needs of the component groups.

According to the invention, the industrial plant is a wind turbine and comprises a first group of heat-dissipating components; a second group of heat-dissipating components; and an embodiment of the inventive heat transfer arrangement to circulate heat transfer fluid to the component groups. As indicated above, the cooling requirements of a "high priority" component group exceed the cooling requirements of the other component group, and such a "high priority" group will reliably be cooled by the heat transfer arrangement on account of the specific shape of the fluid line junction of the inventive heat transfer arrangement.

According to the invention, the method of connecting a first group of heat-dissipating components and a second group of heat-dissipating components in a fluid line circuit of a heat transfer arrangement comprises the steps of arranging a first heat exchanger to circulate heat transfer fluid through pipes of the fluid line circuit; arranging a second heat exchanger to circulate heat transfer fluid through pipes of the fluid line circuit; providing a common fluid line with a first portion leading to the first component group and a second portion leading to the second component group; and forming a fluid line junction between the common fluid line and the outflow lines of the heat exchangers by connecting each outflow line at an acute intake angle of at most 75° to the second portion of the common fluid line.

Particularly advantageous embodiments and features of the invention are given by the dependent claims, as revealed in the following description. Features of different claim categories may be combined as appropriate to give further embodiments not described herein.

In the following, without restricting the invention in any way, it may be assumed that the industrial facility deploying a heat transfer arrangement is a wind turbine, for example a direct-drive wind turbine. A wind turbine generally comprises multiple heat-dissipating components. In the context of the invention, these components are spatially and/or functionally organized into a "high-priority group" (with one or more components that have stricter cooling requirements) and a "low-priority group" (with components that can tolerate higher temperatures) as explained above.

The first heat exchanger can be any suitable kind of heat exchanger. In the following, the first heat exchanger may be assumed to be realised as a liquid-to-air heat exchanger mounted at the nacelle exterior, for example towards the rear of the nacelle. A fluid line carrying warmed heat transfer fluid leads to this heat exchanger.

The second heat exchanger can also deploy any suitable heat transfer mode to remove waste heat from a component group as well as heat dissipated by the generator. In the following, the second heat exchanger may be assumed to be a liquid-to-air heat exchanger mounted in the interior near the hub, for example in the generator space (a cavity in the interior of a direct-drive generator). A fluid line carrying warmed heat transfer fluid leads to this heat exchanger. Fins or plates extending outward from the heat exchanger are optimally exposed to a cooling airflow that is actively drawn into the generator space, for example through air inlets in the floor of the nacelle.

The outflow lines from the heat exchangers to the fluid line junction, the common fluid line and the return lines from the component groups collectively form the cooling circuit of the heat transfer arrangement. Liquid coolant such as water, a mixture of water and glycol, etc. can be continuously circulated through this circuit, for example by a pump arranged in a fluid line. In the inventive heat transfer arrangement, the fluid line junction in the common fluid line allows the cooler liquid from one of the heat exchangers to be routed to the high-priority component group, i.e. the fluid line leading to the high-priority component group will carry the liquid from the coldest outflow line.

The common fluid line extends between the component groups, and the fluid outflow lines from the heat exchangers feed into the common fluid line at the fluid line junction. The common fluid line therefore comprises a first portion extending between the fluid line junction and one component group and a second portion extending between the fluid line junction and the other component group. As indicated above, a heat exchanger outflow line subtends an acute intake angle of at most 75°, more preferably at most 65° to the second portion of the common fluid line. In a particularly preferred embodiment of the invention, a heat exchanger outflow line subtends an acute intake angle of at least 45° to the second portion of the common fluid line.

While the intake angle of the outflow lines can be slightly different, in a particularly preferred embodiment of the invention the outflow lines preferably subtend essentially identical intake angles to the second portion of the common fluid line. This ensures a consistent fluid behaviour at the fluid line junction even when a "switchover" takes place when the temperature difference in the heat exchanger outflow lines is reversed.

In a preferred embodiment of the invention, the common fluid line and the heat exchanger outflow lines have the same diameter, for example all pipes and ducts in the cooling circuits can have a diameter in the order of 100 mm.

The fluid line junction can be realised in any suitable manner. In a particularly preferred embodiment of the invention, the fluid line junction comprises a manifold or fitting that is shaped to orient each heat exchanger outflow line at a desired intake angle relative to the second portion of the common fluid line. The fitting can be made from a suitable material, for example from an aluminium block.

During operation of the wind turbine, the armature and field of the generator give off heat, and the generator is air-cooled by drawing in ambient air from the exterior, for example an air intake may be provided in the floor of the nacelle. The second heat exchanger is positioned in the path of the air intake, which therefore removes heat from the fluid in the return line to the second heat exchanger.

Similarly, if the relative humidity in the nacelle interior is high - for example as a result of a shutdown - the return line of the second heat exchanger can be used to deliberately convey warm fluid into the path of the air intake in order to lower the relative humidity. In this way, damage from water condensation is avoided, for example damage from short circuits and/or corrosion which might otherwise result from condensation of water droplets on exposed metal surfaces. In the inventive heat transfer arrangement, waste heat from the low-priority component group can be routed to the second heat exchanger to raise the temperature in the generator space. By diverting some of the usually significantly warmer fluid from the low-priority component group to the second heat exchanger, the air intake into the generator space can be efficiently warmed, thereby reducing the relative humidity in the generator space.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Figure 1 shows a block diagram of a direct-drive wind turbine;
Figure 2 and Figure 3 illustrate a configuration with merged cooling circuits;
Figure 4 illustrates fluid behaviour at the fluid line junction of the inventive heat transfer arrangement;
Figure 5 shows the inventive configuration of merged cooling circuits;
Figure 6 illustrates fluid behaviour at the fluid line junction of the inventive heat transfer arrangement;
Figure 7 is a block diagram of the inventive configuration of merged cooling circuits;
Figure 8 shows a block diagram of a prior art wind turbine.

In the diagrams, like numbers refer to like objects throughout. Objects in the diagrams are not necessarily drawn to scale.

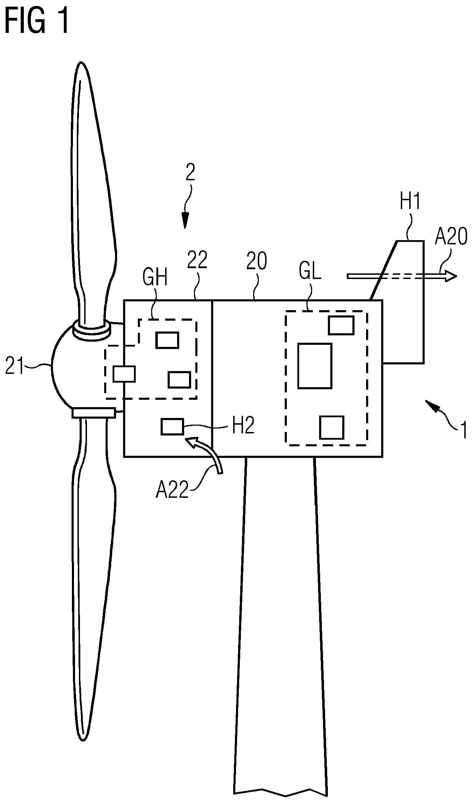

Figure 1 shows a block diagram of a direct-drive wind turbine 2, indicating various heat-dissipating components. The components are arranged in groups GL, GH according to their cooling requirements. Here, one group GL comprises a power converter and any other heat source located towards the rear of the nacelle, while another group GH comprises hydraulic units in the hub 21, electrical cabinets, and any other heat source that is located towards the front or "hub end" of the nacelle 20.

The wind turbine 2 is equipped with an embodiment of the inventive heat transfer arrangement 1. This comprises a first heat exchanger H1 and a second heat exchanger H2 provided to circulate coolant fluid through fluid lines of a cooling circuit.

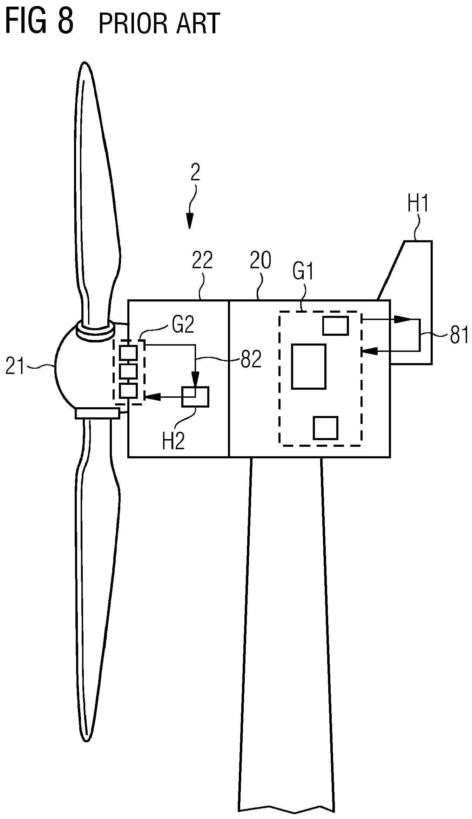

In the prior art, as illustrated in Figure 8, a heat transfer arrangement for a wind turbine with such heat-dissipating components generally comprises a first cooling circuit connecting one group of components G1 or heat source with a first heat exchanger H1, and a second cooling circuit connecting another group of components G2 or heat source with a second heat exchanger H2. These heat transfer arrangements are functionally and spatially separate, and are controlled independently of each other.

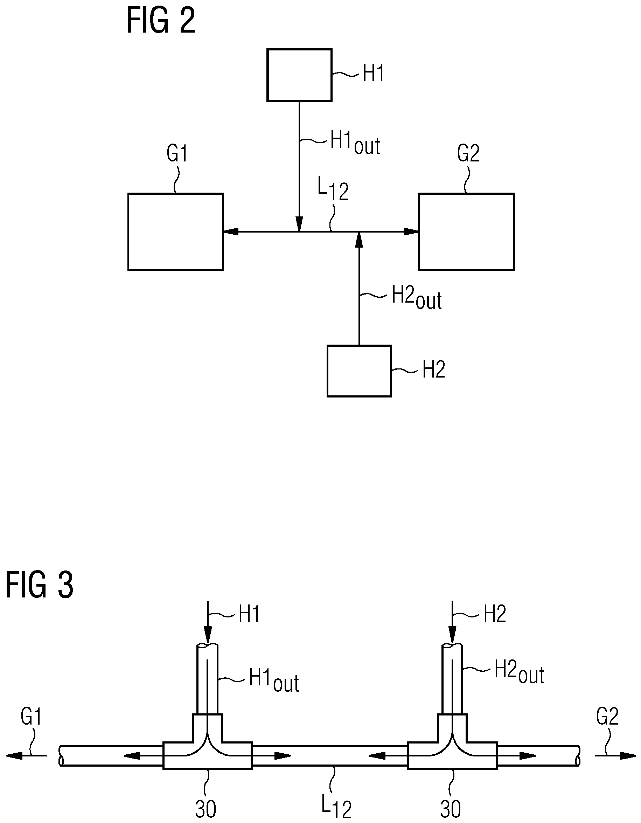

It is possible to merge such cooling circuits as illustrated in Figure 2. Here, A common fluid line extends between the component groups G1, G2, and the outlet lines H1ₒᵤₜ, H2ₒᵤₜ of the heat exchangers H1, H2 connect to the common fluid line L₁₂. However, as explained above, the different component groups G1, G2 may have different cooling requirements, for example the second component group G2 may include temperature-sensitive components which must be cooled below a certain threshold to avoid shutdown of the wind turbine. Furthermore, the fluid in one outlet line may have a higher flow rate than the fluid in the other outlet line, i.e. it moves faster than the fluid in the other outlet line. Generally, the fluid with the higher flow rate is also warmer than the other fluid. This can lead to an undesirable effect as illustrated in Figure 3. Here, the outlet line H1ₒᵤₜ on the left is conveying faster-moving (warmer) fluid than the outlet line H2ₒᵤₜ on the right. Both outlet lines H1ₒᵤₜ, H2ₒᵤₜ are connected to the common fluid line L₁₂ by conventional T-fittings 30, so that each outline line meets the common fluid line at a 90° angle. As a result, the warmer fluid (coming from the first heat exchanger H1 in this example) dominates the flow distribution to the component groups, and a significant portion of the warmer fluid may be conveyed to the second component group G2. However, as indicated above, the addition of warm coolant fluid can have a detrimental effect on the performance of components in this second component group G2.

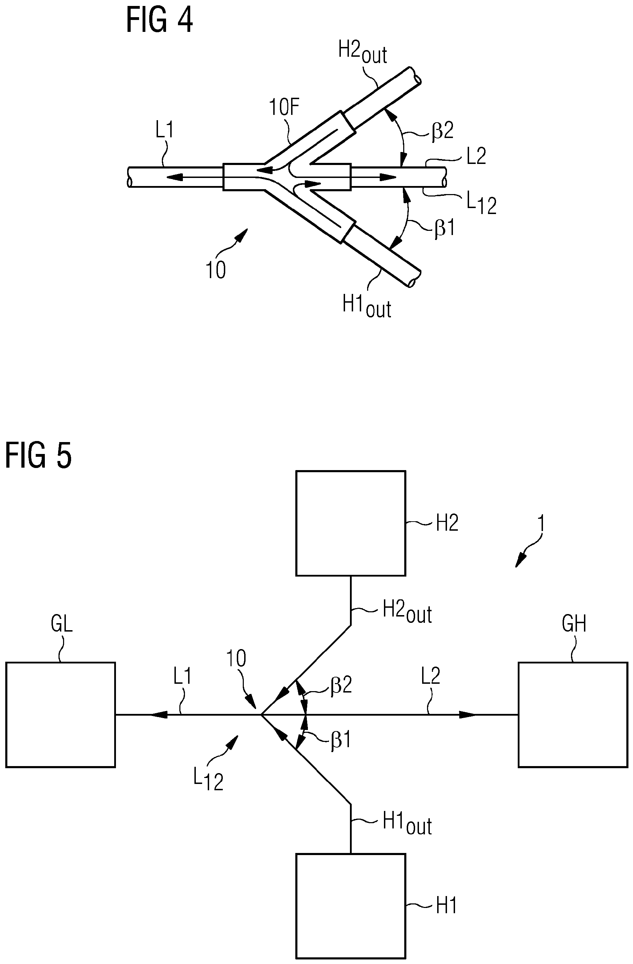

This problem is overcome by the inventive heat transfer arrangement 1, as illustrated in Figure 4 and Figure 5. The diagrams show a fluid line junction 10 formed by the convergence of the outflow line H1ₒᵤₜ of the first heat exchanger H1, the outflow line H2ₒᵤₜ of the second heat exchanger H2, a first portion L1 of the common fluid line L₁₂ and a second portion L2 of the common fluid line L₁₂. The outflow lines H1ₒᵤₜ, H2ₒᵤₜ of the heat exchangers H1, H2 both subtend an acute intake angle β1, β2 to the second portion L2 of the common fluid line L₁₂. An acute intake angle β1, β2 is preferably no larger than 75°. Equally, an acute intake angle β1, β2 is preferably at least 45°.

The fluid line junction can be essentially symmetrical about the common fluid line when both outflow lines H1ₒᵤₜ, H2ₒᵤₜ subtend the same intake angle to the second portion L2 of the common fluid line L₁₂. As illustrated in Figure 4, the fluid lines H1ₒᵤₜ, H2ₒᵤₜ, L1, L2 can be connected by a suitably formed fitting 10F or manifold, shaped so that each outflow line H1ₒᵤₜ, H2ₒᵤₜ meets the common fluid line L₁₂ at the same angle. The fluid lines H1ₒᵤₜ, H2ₒᵤₜ, L1, L2 meeting at the manifold or fitting 10F preferably all have the same diameter, for example a diameter in the order of 100 mm.

Figure 4 illustrates a situation in which the flow rate in the outflow line H1ₒᵤₜ of the first heat exchanger H1 is higher than the flow rate in the outflow line H2ₒᵤₜ of the second heat exchanger H2. Generally, this coincides with a higher fluid temperature in the outflow line H1ₒᵤₜ of the first heat exchanger H1 and a lower fluid temperature in the outflow line H2ₒᵤₜ of the second heat exchanger. Therefore, the hotter fluid is carried by its own momentum (higher flow rate) onwards towards the low-priority component group. The cooler fluid from the second heat exchanger H2 is forced around the corner into the second portion L2 of the common fluid line. The warm and cool fluids do not merge to any significant extent at the fluid line junction 10, so that the warmer fluid is transported primarily to the low-priority component group and the cooler fluid is transported primarily to the high-priority component group. This advantageous distribution is achieved solely by the orientation of the outflow lines relative to the second portion of the common fluid line, i.e. the favourable fluid distribution is achieved by the fluid line junction.

In an exemplary situation, coolant from the first heat exchanger H1 has a temperature of 45 °C, while coolant from the second heat exchanger H2 has a temperature of 40 °C; the flow rate through the first outflow line H1ₒᵤₜ is 600 litres/min, while the flow rate through the second outflow line H2ₒᵤₜ is 200 litres/min. In other words, 800 litres/min arrive at the fluid line junction 10 in a 3:1 flow distribution. The dynamics of the faster-moving (and also warmer) fluid dominate the fluid behaviour at the fluid line junction 10. The faster-moving fluid will tend to continue in the same direction, i.e. from the first outflow line H1ₒᵤₜ into the first portion L1 of the common fluid line L₁₂ (and towards the low-priority component group GL). As a consequence, the slower-moving (and cooler) fluid in the second outflow line H2ₒᵤₜ is forced around the angled corner of the fluid line junction 10 into the second portion L2 of the common fluid line L₁₂ (and towards the high-priority component group GH).

Fluid dynamics result in the fast-moving fluid "picking up" a fraction of the cooler fluid from the second outflow line H2ₒᵤₜ, and the slower-moving fluid "picking up" a fraction of the hotter fluid from the first outflow line H1ₒᵤₜ (indicated by the short arrows). However, the extent of mixing between the faster-moving fluid and the slower-moving fluid is negligible, since the momentum of the faster-moving fluid will effectively carry most of it into the first portion L1 of the common fluid line in the direction of the low-priority component group GL.

Therefore, the geometry at the fluid line junction 10 of the inventive heat transfer arrangement 1 ensures that the slower-moving, cooler fluid will effectively and reliably be transported to the high-priority component group GH, while the momentum of the faster-moving, warmer fluid will always carry it towards the low-priority component group GL. In the present example, the slower-moving fluid in the second portion L2 of the common fluid line L₁₂ has a temperature of 40.6 °C, which is only marginally warmer than the temperature (40 °C) of the fluid in the outflow line coming from the second heat exchanger H2.

The total input flow is the same as the total output flow, so that - continuing with the above example - 800 litres/min must leave through the common fluid line L₁₂. The flow distribution in the common fluid line L₁₂ is now at a 4:1 ratio, with 640 L/min moving towards the low-priority component group and 160 L/min moving towards the high-priority component group.

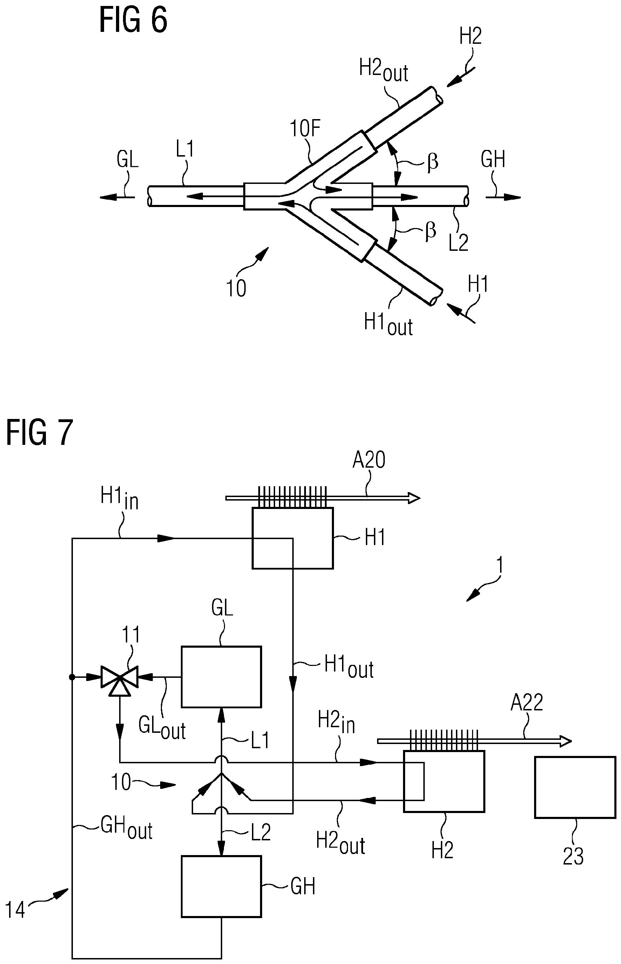

Figure 6 shows a further scenario in which cooling fluid for the high-priority component group is provided by the first heat exchanger. In this situation, the faster-moving (warmer) fluid from the second heat exchanger H2 is carried by its own momentum onwards towards the low-priority component group GL. The slower-moving (cooler) fluid from the first heat exchanger H1 is forced around the corner into the second portion L2 of the common fluid line. In this exemplary situation, coolant from the first heat exchanger H1 may have a flow rate of 200 litres per minute (at a temperature of 40 °C), while the faster-moving coolant from the second heat exchanger H2 has a flow rate of 600 litres per minute (at a temperature of 45 °C). As explained above, the dynamics of the faster-moving (and usually warmer) fluid determine the fluid behaviour at the fluid line junction 10, so that the slower-moving (and usually cooler) fluid in the first outflow line H1ₒᵤₜ is forced around the angled corner of the fluid line junction 10 into the second portion L2 of the common fluid line L₁₂ and towards the high-priority component group GH. Here, both outflow lines H1ₒᵤₜ, H2ₒᵤₜ meet the common fluid line L₁₂ at the same angle β.

Figure 7 shows a simplified diagram of the merged cooling circuits in the inventive heat transfer arrangement 1. The diagram shows the first liquid-to-air heat exchanger H1 exposed to an ambient airflow A20 at the exterior of the nacelle 20, and the second liquid-to-air heat exchanger H2 exposed to an ambient airflow A22 drawn into the interior of the generator housing 22. This airflow A22 serves to cool the generator during operation of the wind turbine 2. The outflow lines H1ₒᵤₜ, H2ₒᵤₜ of the heat exchangers H1, H2 meet as described above at the fluid line junction 10. This ensures that the slower-moving (cooler) fluid is always routed to the high-priority component group GH, while the faster-moving (warmer) fluid is always routed to the low-priority component group GL. Warmed fluid leaves the component groups GL, GH through fluid lines GLₒᵤₜ, GHₒᵤₜ.

In this exemplary embodiment, the first heat exchanger H1 receives warmed fluid from the high-priority component group GH, while the second heat exchanger H2 can receive warmed fluid from the low-priority component group GL alone, or it can receive a mixture of the warmed fluid from both component groups GL, GH. To this end, a mixing valve 11 is included in the cooling circuit as indicated. For example, if the relative humidity in the generator space is to be lowered, some of the warmed fluid from fluid line GHₒᵤₜ is mixed with the warmed fluid from fluid line GLₒᵤₜ and sent to the second heat exchanger H2. In this way, the inventive heat transfer arrangement can use waste heat given off by components of the low-priority component group - for example a transformer or power converter - to improve climate conditions in the generator space. The diagram illustrates this further function, in which a portion of the faster-moving (hot) fluid leaving the low-priority component group GL is routed to the return line H2ᵢₙ of the second heat exchanger H2. This warmer fluid then heats the air A22 passing over the second heat exchanger H2, allowing the air in the generator space to be warmed, for example to reduce the relative humidity. The mixing valve 11 can be controlled as appropriate on the basis of a measurement of relative humidity.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A heat transfer arrangement (1) for a first group (GL) and a second group (GH) of heat-dissipating components, comprising
- a fluid line circuit (14);
- a first heat exchanger (H1) arranged to circulate heat transfer fluid through the fluid line circuit (14);
- a second heat exchanger (H2) arranged to circulate heat transfer fluid through the fluid line circuit (14);
wherein the fluid line circuit (14) includes
- a common fluid line (L₁₂) comprising a first portion (L1) leading to a first component group (GL) and a second portion (L2) leading to a second component group (GH); and
- a fluid line junction (10) formed by the convergence of the outflow line (H1ₒᵤₜ) of the first heat exchanger (HI), the outflow line (H2ₒᵤₜ) of the second heat exchanger (H2), the first portion (L1) of the common fluid line (L₁₂) and the second portion (L2) of the common fluid line (L₁₂), wherein the outflow line (H1ₒᵤₜ, H2ₒᵤₜ) of each heat exchanger (HI, H2) subtends an acute angle (β, β1, β2) of at most 75° to the second portion (L2) of the common fluid line (L₁₂) .

2. A heat transfer arrangement according to the preceding claim, wherein an outflow line (H1ₒᵤₜ, H2ₒᵤₜ) subtends an acute angle (β, β1, β2) of at most 60°, more preferably at most 45°, to the second portion (L2) of the common fluid line (L₁₂).

3. A heat transfer arrangement according to any of the preceding claims, wherein both outflow lines (H1ₒᵤₜ, H2ₒᵤₜ) subtend the same angle (β) to the second portion (L2) of the common fluid line (L₁₂) .

4. A heat transfer arrangement according to any of the preceding claims, wherein the fluid line junction (10) is symmetrical about the common fluid line (L₁₂).

5. A heat transfer arrangement according to any of the preceding claims, wherein the fluid line junction (10) comprises a manifold (10F) shaped to arrange the heat transfer fluid outflow lines (H1ₒᵤₜ, H2ₒᵤₜ) at the acute intake angle (β, β1, β2) relative to the second portion (L2) of the common fluid line (L₁₂) .

6. A heat transfer arrangement according to any of the preceding claims, wherein the first portion (L1) and the second portion (L2) of the common fluid line (L₁₂) are essentially colinear.

7. A heat transfer arrangement according to any of the preceding claims, wherein the cooling circuit (14) comprises a mixing valve (11) arranged to combine heat transfer fluid from both component groups (GL, GH).

8. A wind turbine (2) comprising
- a first group of heat-dissipating components (GL); and
- a second group of heat-dissipating components (GH), wherein the cooling requirements of the second component group (GH) exceed the cooling requirements of the first component group (GL); and
- a heat transfer arrangement (1) according to any of claims 1 to 7 to circulate heat transfer fluid to the component groups (GL, GH).

9. A wind turbine according to the preceding claim, wherein the first component group (GL) comprises any of: a power converter, a transformer, a hydraulic device, a bearing.

10. A wind turbine according to any of claims 8 to 9, wherein the second component group (GH) comprises any of: a computer, an uninterruptible power supply, an electrical cabinet.

11. A wind turbine according to any of claims 8 to 10, wherein the first heat exchanger is realised as a liquid-to-air heat exchanger (H1) arranged in an ambient airflow (A20) at the exterior of the nacelle (20).

12. A wind turbine according to any of claims 8 to 11, wherein the second heat exchanger is realised as a liquid-to-air heat exchanger (H2) arranged in an airflow (A22) drawn into an interior space of the wind turbine (2).

13. A method of connecting a first group (GL) of heat-dissipating components and a second group (GH) of heat-dissipating components in a fluid line circuit (14) of a heat transfer arrangement (1), comprising the steps of
- arranging a first heat exchanger (H1) to circulate heat transfer fluid through the fluid line circuit (14);
- arranging a second heat exchanger (H2) to circulate heat transfer fluid through the fluid line circuit (14);
- providing a common fluid line (L₁₂) with a first portion (L1) leading to the first component group (GL) and a second portion (L2) leading to the second component group (GH);
- forming a fluid line junction (10) between the outflow line (H1ₒᵤₜ) of the first heat exchanger (HI), the outflow line (H2ₒᵤₜ) of the second heat exchanger (H2), the first portion (L1) of the common fluid line (L₁₂), and the second portion (L2) of the common fluid line (L₁₂) by connecting each outflow line (H1ₒᵤₜ, H2ₒᵤₜ) at an acute intake angle (β, β1, β2) of at most 60° to the second portion (L2) of the common fluid line (L₁₂) .

14. A method according to the preceding claim, comprising a step of determining the relative humidity in an interior space, and directing warmed fluid from the first component group (G1) to the second heat exchanger (H2) when the relative humidity exceeds a predetermined threshold.
